# EUROPÄISCHE PATENTSCHRIFT

(11) **EP 0 887 238 B1**
(45) Veröffentlichungstag und Bekanntmachung des Hinweises auf die Patenterteilung: **20.03.2002**
(21) Anmeldenummer: 98111028.1
(22) Anmeldetag: 16.06.1998
(51) Int. Cl.: B60R 21/08

(54) **Als Trennvorrichtung ausgebildete Rückhaltevorrichtung, insbesondere für Kombinations-Personenkraftwagen od. dgl**
Partition type restraint system, for an estate vehicle in particular
Dispositif de retenue en forme d'élément de séparation, en particulier pour une voiture familiale

(30) Priorität: 17.06.1997 DE 19725409
(43) Veröffentlichungstag der Anmeldung: 30.12.1998
(73) Patentinhaber: PETER BUTZ GmbH & Co Verwaltungs-KG, 40764 Langenfeld (DE)
(72) Erfinder: Crisp, Sam T., 3140 Keerbergen (BE)
(74) Vertreter: Patentanwälte Ostriga & Sonnet

(56) Entgegenhaltungen:
- DE-A- 2 229 261
- DE-A- 2 601 314
- DE-A- 19 520 584
- DE-A- 19 641 682
- DE-C- 19 603 105
- FR-A- 2 142 464

## Beschreibung

Die Erfindung betrifft eine als Trennvorrichtung ausgebildete Rückhaltevorrichtung entsprechend dem Oberbegriff des Anspruchs 1. Eine solche Rückhaltevorrichtung, und zwar eine Trennvorrichtung, ist in der DE 196 41 682 A1 beschrieben.

Die Erfindung befaßt sich vornehmlich mit bahnförmigen Rückhaltevorrichtungen, bei denen die Rückhaltebahn als Netz ausgebildet sein kann. Derartige Vorrichtungen dienen z.B. bei Kombinations-Personenkraftwagen der Sicherung der im Kofferraum befindlichen Ladung.

Als Trennvorrichtungen ausgebildete Rückhaltevorrichtungen, welche einen flexiblen Vorhang, insbesondere einen Netzvorhang, aufweisen, sind an fahrzeugseitigen Befestigungspunkten befestigt. Durch derartige Trennvorrichtungen wird eine Trennung zwischen dem Fahrgastraum und dem Lade- bzw. Kofferraum erzielt.

Obwohl die Erfindung allgemein auf bahnartige Rückhaltevorrichtungen, also auch auf flächig geschlossene Bahnen, anwendbar ist, sollen im folgenden beispielhaft die bevorzugten Anwendungsformen, nämlich die netzartigen Rückhaltevorrichtungen, behandelt werden.

Auch sind Boden-Rückhaltevorrichtungen, sogenannte Bodennetze, bekannt (DE 195 20 584 C2), die aus einem flexiblen Werkstoff bestehen und die von Hand an geeigneten fahrzeugseitigen Befestigungsstellen befestigt werden, um die Ladung zu sichern.

Solche Bodennetze können in ihrer Sicherheitswirkung nur effektiv sein, wenn sie die Ladung genau überdecken und angespannt werden. Für den Fall, daß, z.B. durch einen Crash bedingt, die Längsbeschleunigung und/oder die Querbeschleunigung des Fahrzeuges und/oder des Netzes über einem vorbestimmten Wert liegen, ist bei dem Bodennetz gemäß der DE 195 20 584 C2 eine durch einen Sensor aktivierbare Netzstraffeinrichtung vorgesehen, welche das über dem Ladegut verzurrte Netz schlagartig strafft und damit sofort eine hohe Sicherungskraft für das Ladegut bereitstellt, bevor dieses eine merkliche Relativgeschwindigkeit gegenüber dem Fahrzeug entwickeln kann.

Als Trennvorrichtungen ausgebildete Rückhaltevorrichtungen gemäß der DE 196 41 682 A1 besitzen hingegen die Eigenart, das größtmögliche Volumen an Gepäckraum vom Fahrgastraum abzutrennen, um zu verhindern, daß die Ladung in einer Unfallsituation in den Fahrgastraum eindringt. Hierbei muß beachtet werden, daß sich die Ladung häufig in einem undefinierten großen Abstand von der Trennvorrichtung befinden kann, so daß, bedingt durch einen Unfall beispielsweise, die Ladung bereits eine erhebliche kinetische Energie beinhaltet, wenn sie erstmals auf die Trennvorrichtung trifft. Diese erhebliche Energie kann eine Deformierung der gesamten Trennvorrichtung einschließlich der fahrzeugseitigen Befestigungsstellen und außerdem zur Folge haben, daß die Ladung in gefährlicher Weise in den Fahrgastraum eindringt.

Ausgehend von der als Trennvorrichtung ausgebildeten Rückhaltevorrichtung gemäß der DE 196 41 682 A1, liegt der Erfindung die Aufgabe zugrunde, die bekannte Rückhaltevorrichtung derart abzuändern, daß die Ladung bei einer Verminderung einer schädlichen Belastung sowohl der Rückhaltevorrichtung als auch der fahrzeugseitigen Befestigungspunkte besser als bisher abgefangen werden kann.

Die Erfindung löst diese Aufgabe entsprechend den Merkmalen des Kennzeichenteils des Anspruchs 1.

Derartige Energiespeicher sind allgemein bekannt und können beispielsweise eine mechanische Feder, so auch eine Gasfeder, enthalten, deren potentielle Energie im Bedarfsfall zur Verlagerung und Straffung der Rückhaltebahn freigegeben wird. Ein solcher Energiespeicher kann auch auf chemischer Basis, beispielsweise auf pyrotechnischer Basis, funktionieren. Solche aufgeladenen Energiesysteme werden beispielsweise bekanntermaßen beim Straffen von Kraftfahrzeug-Sicherheitsgurten angewandt.

Die besondere Eigenart der Erfindung besteht darin, daß eine vorhangartige Rückhaltebahn im Bedarfsfalle nicht etwa nur gestrafft wird, sondern daß im Bedarfsfall zunächst die Geometrie der Befestigungspunkte für die Rückhaltebahn verändert wird, indem die Rückhaltebahn zur Ladung hin verlagert wird. Dies geschieht am besten dadurch, daß man die Befestigungspunkte teilweise oder sämtlich zur Ladung hin verlagert und die Rückhaltebahn unmittelbar anschließend an der Ladung verspannt.

Zweckmäßig sieht die Erfindung vor, zwischen mindestens einer fahrzeugseitigen Befestigungsstelle und der Rückhaltebahn einen Energiespeicher vorzusehen, welcher im Bedarfsfalle die Rückhaltebahn an die fahrzeugseitige Befestigungsstelle, damit auch an die Ladung, heranzieht.

Bei Trennvorrichtungen, deren Trennetze vertikal angeordnet sind, hat es sich als zweckmäßig herausgestellt, vornehmlich die obere Haltestange entgegen der Fahrzeug-Fahrtrichtung durch sich entlastende Energiespeicher nach rückwärts gegen die Ladung zu ziehen und dabei gegen die Ladung zu spannen.

Ganz allgemein werden mit der Erfindung folgende Vorteile erzielt:

Dadurch, daß die Rückhaltebahn im Bedarfsfall (beispielsweise bei einem Unfall) aktiv an die Ladung angelegt wird, d.h. der Abstand der Rückhaltebahn zu der Ladung erheblich verringert wird, wird in jedem Fall auch die Strecke erheblich verringert, welche beim Bekannten einer schädlichen Beschleunigung der Ladung zur Verfügung steht.

Dadurch, daß im Bedarfsfall der oder die Energiespeicher die Rückhaltebahn, z.B. das Trennetz, an die Ladung heranführen, wird die Möglichkeit eines schädlichen Eindringens der Ladung in den Fahrgastraum erheblich verringert.

Durch die Erfindung werden bei einer insbesondere unfallbedingten Belastung die mechanischen Beanspruchungen sowohl der fahrzeugseitigen Befestigungsstellen als auch der Rückhaltebahn selbst erheblich verringert.

In schematischen Zeichnungen ist die Erfindung anhand eines bevorzugten Ausführungsbeispiels verdeutlicht, es zeigt
Fig. 1 ein Trennetz in räumlicher Darstellung und
Fig. 2 eine Funktionsskizze der in Fig. 1 gezeigten Anordnung.

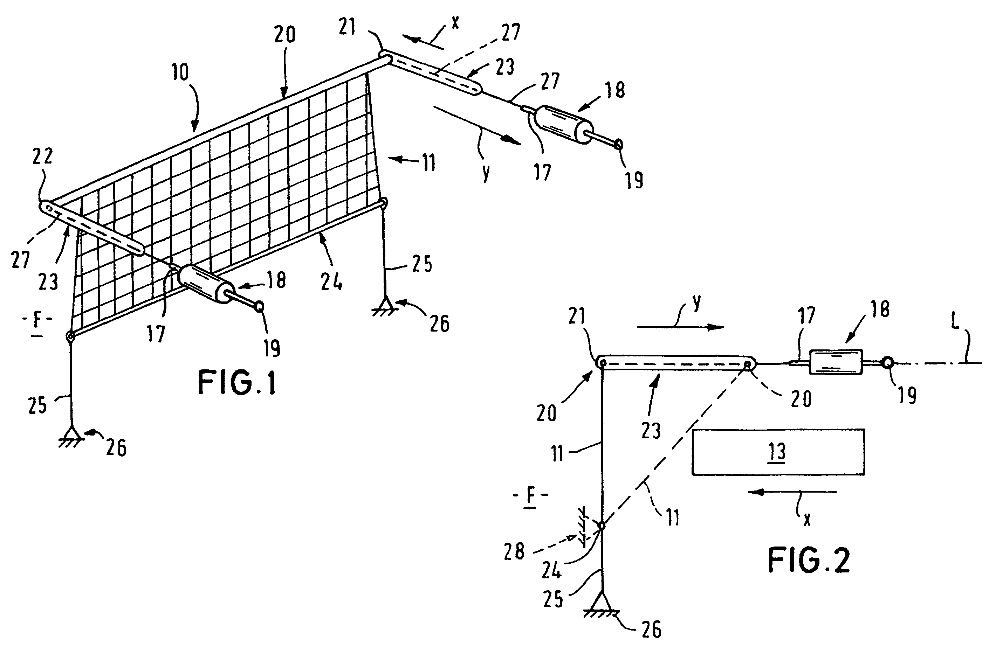

Gemäß Fig. 1, die eine Trennvorrichtung 10 mit einer Rückhaltebahn 11, im folgenden Netzbahn genannt, zeigt, ist eine obere Haltestange 20 mit ihren beiden Enden 21 und 22 jeweils in einer am Fahrzeug festen Axialführung 23 parallel zur Fahrtrichtung x des Fahrzeugs axial verschieblich aufgenommen. Dabei sind die Enden 21, 22 gegen ein Herausziehen aus den Axialführungen 23 quer zu deren Längserstreckung, z.B. durch eine hinterschnittene Formgebung der Enden 21, 22, gesichert.

Die unten an der Netzbahn 11 befestigte untere Haltestange 24 ist z.B. mittels Gurtbänder 25 an fahrzeugbodenseitigen Widerlagern 26 befestigt. Die Trennvorrichtung 10 ist üblicher Weise hinter einer nicht gezeichneten Fond-Sitzlehne eines Kombinations-Personenkraftwagens befestigt, dessen Fahrgastraum durch F angedeutet ist.

Beide Enden 21, 22 der oberen Haltestange 20 sind mittels einer mechanischen, insbesondere zugfesten Verbindung 27, die z.T. nur gestrichelt dargestellt ist, mit dem kolbenstangenartigen Fortsatz 17 je eines Energiespeichers 18 verbunden, welcher seinerseits jeweils an fahrzeugseitigen Haltepunkten 19 befestigt ist.

Die Energiespeicher 18 arbeiten etwa nach Art an sich bekannter Gurtstraffer. Sobald die Beschleunigung bzw. die Verzögerung des Fahrzeuges, beispielsweise bei einem Unfall, eine kritische Grenze erreicht, sorgt die träge Masse von Beschleunigungssensoren, die rein mechanisch oder auch elektronisch arbeiten können, dafür, daß die potentielle Energie des Energiespeichers (z.B. Federspeicher oder pyrotechnischer Speicher) aktiviert wird. Bei dieser Aktivierung kontrahiert der Energiespeicher in Richtung seiner Längsachse L. Die Kontraktion des Energiespeichers 18 führt dazu, daß die Netzbahn 11 entsprechend den mit y bezeichneten Pfeilen verlagert und gestrafft wird.

Sobald dem Fahrzeug (vgl. insbesondere Fig. 1) eine kritische Beschleunigung bzw. Verzögerung (z.B. durch einen Unfall) vermittelt wird, wird der Energiespeicher 18 infolge eines Signals eines nicht dargestellten Sensors ausgelöst, kontrahiert dabei in Richtung seiner Längsachse L und zieht die obere Haltestange 20 in Spannrichtung y nach hinten, so daß die Netzbahn 11 und die obere Haltestange 20 die gestrichtelt eingezeichneten Positionen einnehmen. Hierdurch wird die Netzbahn 11 der Ladung 13 angenähert und zugleich gegen letztere gespannt, so daß der Beschleunigungsweg der Ladung 13 in Richtung x (z.B. Fahrtrichtung x) im Vergleich zur durchgezogenen eingezeichneten Position der Netzbahn 11 erheblich verringert ist. Da hierbei die Netzbahn 11 schräg von oben gegen die Ladung 13 gezogen wird, wird zugleich eine Sicherung der Ladung 13 gegen ein Hochschlagen erzielt.

Etwa in Höhe der unteren Haltestange 24 können gegebenenfalls zusätzliche Befestigungspunkte 28 für die Netzbahn 11 bzw. für die untere Haltestange 24 vorgesehen sein.

## Patentansprüche

1. Als Trennvorrichtung ausgebildete Rückhaltevorrichtung (10) mit einer durch ein Trennnetz gebildeten Rückhaltebahn (11) für Kraftfahrzeuge, insbesondere für Kombinations-Personenkraftwagen od.dgl., welche zwischen fahrzeugfesten Befestigungsstellen (23, 26) verspannbar ist, **dadurch gekennzeichnet,**
**daß** eine vornehmlich das Trennnetz haltende, mit ihren beiden Enden (21, 22) jeweils in einer am Fahrzeug festen Axialführung (23) parallel zur Fahrzeug-Fahrtrichtung (x) axial verschieblich aufgenommene Haltestange vorhanden ist,
und **daß** die Rückhaltevorrichtung (10) potentielle Energie enthaltende, insbesondere vorgespannte oder aufgeladene Energiespeicher (18) enthält,
die zwischen mindestens einer fahrzeugfesten Befestigungsstelle (19) und der Rückhaltebahn (11) vorgesehen sind,
welche bei einer plötzlichen Belastung des Fahrzeuges, z.B. bei einem Unfall, ihre potentielle Energie in kinetische Energie umwandeln, die zu einer Bewegung (y) führt,
die die obere Haltestange und damit das Trennnetz an die fahrzeugseitige Befestigungsstelle (19), damit auch an die Ladung (13), heranzieht und verspannt.

2. Als Trennvorrichtung ausgebildete Rückhaltevorrichtung nach Anspruch 1, **dadurch gekennzeichnet, daß** die Rückhaltebahn (11) schräg von oben gegen die Ladung (13) ziehbar ist.

3. Als Trennvorrichtung ausgebildete Rückhaltevorrichtung nach Anspruch 1 oder nach Anspruch 2, **dadurch gekennzeichnet, daß** die Enden (21, 22) der oberen Haltestange (20) gegen ein Herausziehen aus den Axialführungen (23) quer zu deren Längserstreckung gesichert sind.

4. Als Trennvorrichtung ausgebildete Rückhaltevorrichtung nach einem der Ansprüche 1 bis 3, **dadurch gekennzeichnet, daß** die Enden (21, 22), der oberen Haltestange (20) durch eine hinterschnittene Formgebung gegen ein Herausziehen aus den Axialführungen (23) quer zu deren Längserstreckung gesichert sind.

## Claims

1. Partition-type restraint system (10) with a restraining web (11) formed by a partition net for motor vehicles, in particular for estate vehicles or the like, which can be braced between vehicle-fixed attachment points (23, 26), **characterized in that** a holding bar is present that principally holds the partition net and is held axially displaceably parallel to the direction of travel (x) of the vehicle with its two ends (21, 22) respectively in an axial guide (23) fixed on the vehicle, and that the restraint system (10) contains energy storage devices containing potential energy, in particular pretensioned or charged energy storage devices (18), which are provided between at least one vehicle-fixed attachment point (19) and the restraining web (11), which devices in the event of sudden loading of the vehicle, e.g. in an accident, convert their potential energy into kinetic energy, which leads to a movement (y), which draws the upper holding bar and thus the partition net to the attachment point (19) on the vehicle side and thus also to the load (13), and braces it.

2. Partition-type restraint system according to claim 1, **characterized in that** the restraining web (11) can be pulled obliquely from above against the load (13).

3. Partition-type restraint system according to claim 1 or 2, **characterized in that** the ends (21, 22) of the upper holding bar (20) are secured against removal from the axial guides (23) transversely to their longitudinal extension.

4. Partition-type restraint system according to one of claims 1 to 3, **characterized in that** the ends (21, 22) of the upper holding bar (20) are secured by undercut shaping against removal from the axial guides (23) transversely to their longitudinal extension.

## Revendications

1. Dispositif de retenue (10) réalisé en dispositif de séparation, avec une bande de retenue (11), formé par un filet de séparation, pour véhicules automobiles, en particulier pour des voitures commerciales ou analogues, qui est susceptible d'être tendu entre des points de fixation (23, 26) fixés au véhicule, **caractérisé par le fait qu'**une barre de maintien, logée de façon mobile axialement parallèlement à la direction de roulage de véhicule (x) dans un guidage axial (23) fixé sur le véhicule, est prévue pour maintenir principalement le filet de séparation à ses deux extrémités (21, 22), et **par le fait que** le dispositif de retenue (10) comprend des accumulateurs d'énergie (18), en particulier précontraints ou chargés, contenant une énergie potentielle, les accumulateurs d'énergie étant prévus entre au moins un point de fixation (19) fixé au véhicule et la bande de retenue (11), accumulateurs qui, en cas de sollicitation soudaine imposée au véhicule, par exemple en cas d'accident, convertissent leur énergie potentielle en de l'énergie cinétique, menant à un déplacement (y),
déplacement qui amène la barre de maintien supérieure et, ainsi, le filet de séparation à l'emplacement de fixation (19) situé côté véhicule, ainsi qu'également au chargement (13) et le place sous tension.

2. Dispositif de retenue réalisé sous la forme de dispositif de séparation selon la revendication 1, **caractérisé par le fait que** la bande de retenue (11) est susceptible d'être tirée obliquement vers le haut contre le chargement (13).

3. Dispositif de retenue réalisé sous la forme de dispositif de séparation selon la revendication 1 ou la revendication 2, **caractérisé par le fait que** les extrémités (21, 22) de la barre de maintien supérieure (20) sont assurées contre toute extraction hors des guidages axiaux (23), dans une direction transversale à leur direction longitudinale.

4. Dispositif de retenue réalisé sous la forme de dispositif de séparation, selon l'une des revendications 1 à 3, **caractérisé par le fait que** les extrémités (21, 22) de la barre de maintien supérieure (20) sont assurées, au moyen d'une configuration à contre-dépouille, contre toute extraction hors des guidages axiaux (23), transversalement par rapport à leur direction longitudinale.
